# EUROPEAN PATENT APPLICATION

(11) **EP 2 557 534 A1**
(43) Date of publication of application: **13.02.2013**
(21) Application number: 12178840.0
(22) Date of filing: 01.08.2012
(51) Int. Cl.: G06Q 30/02

(54) **A system and a method of sharing information in an online social network**

(30) Priority: 11.08.2011 US 201161522374 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

The invention relates to a method of sharing information in an online social network, comprising: data mining by analyzing a first user profile and a plurality of other user profiles for finding shared interests among the users of said profiles; selecting from the found shared interests a set of shared interests; displaying at the graphical user interface of the first user the profile of at least one of the other users sharing said set of selected shared interests; and displaying at the graphical user interface further a list of the shared interests from the selected set.

## Description

### Field of the Invention

The present invention relates to a system and to a method of sharing information in an online social network. In particular the present invention relates to a system and to a method of sharing information for encouraging a first user (member) of a social network to explicitly engage with an unconnected second user, i.e. with someone the first user doesn't know yet. The present invention also relates to a system and to a method of sharing information for encouraging the first user (member) to explicitly engage with content he/she doesn't know yet, such as advertisement product information, event information etc..

### Background of Invention

There are known many systems and methods of sharing information in an online social network. They all have in common to present to an user (member) information about other users (members) of the social network and/or about upcoming events. Usually when the user logs into a social network (e.g. facebook.com) the latest information about other members, in particular about linked contacts (friends and buddies), will be displayed on the graphical user interface. There are also displayed recommendations for new contacts on the basis of interrelated links (the linked contacts of own friends and buddies). Thus the activities to make new contacts within the social network are advanced.

US 2005/0171799 A1 describes a method and a system for seeding online social network contacts. The system automatically recommends to the user a set of seed contacts that the user may employ to invite to join their social network. The set of seed contacts may be harvested from the user's existing portal activities, as well as other sources. In one example the system analyzes portal activity, such as email exchanges with the user, and the like, to determine a frequency of contact with the user. Other sources may include emails, names within an address book of the user, names within an address book of another person, a buddy list, an instant messaging list, an activity, a mailing list, an online discussion group, a membership in a category, chat group, and the like.

Beside the communication between members of the network it is often very important to effectively place advertisements to attract the user's interests. Advertisements (ads) in online community sites are therefore usually targeted towards a specific user, based on the profile data the user has entered into the database. However, static advertisements just serve a single main purpose - advertising only. Thus the user doesn't see a reason to take any notice at all and often gets annoyed by the presence of ads.

US 2005/0171955 A1 describes a system and a method which are directed towards enabling information filtering using measures of an affinity of a relationship between subscribers of an online portal system. The affinity of a relationship may be determined based, in part, on the tracking of various online behaviors of and between subscribers of the portal system. Any of a variety of behaviors may be tracked, including message communications between subscribers, participation in instant messaging groups, purchases, activities, categories, and so forth. Such behaviors may be employed to determine a level of trust (or affinity) between subscribers of the portal system. This affinity measurement may be used to filter various information, including product recommendations, ratings, polling queries, advertising, social network communications, personal ads, search results, and the like. Moreover, this affinity measurement may also be employed to perform message spam detection.

Other targeting advertisement methods and system are described e.g. in US 2008/0147501 A1, US 2008/0162260 A1 or US 2410/0070335 Al.

US 2009/0319914 A1 describes method and a system for advancing the relationship between participants in an on-line community. It is described that the nature of the relationship may be represented in a user interface (UI) by a visual element that shows the extent or depth of the relationship. Facets of the relationship may be used to facilitate interaction between participants (e.g., if two participants both like a particular band, then information relevant to the band may be shown as part of the UI when the participants interact with each other). The nature of the relationship may be determined or characterized based on commonality of activities, commonality of interests, the extent to which the participants have interacted with each other in the past, or other facts.

In view of the known methods and systems there is still a need to provide a method and a system of sharing information for encouraging a first user (member) of a social network to explicitly engage with an unconnected second user, and/or to engage with content he/she doesn't know yet.

### Summary of Invention

According to a first aspect of the invention there is provided a method of sharing information in an online social network, comprising: data mining by analyzing a first user profile and a plurality of other user profiles for finding shared interests among the users of said profiles; selecting from the found shared interests a set of shared interests; displaying at the graphical user interface of the first user the profile of at least one of the other users sharing said set of selected shared interests; and displaying at the graphical user interface further a list of the shared interests from the selected set.

Further to this and in correspondence with said method there is provided a system of sharing information in an online social network, comprising processing means for data mining by analyzing a first user profile and a plurality of other user profiles for finding shared interests among the users of said profiles; selecting means for selecting from the found shared interests a set of shared interests; and displaying means for displaying at the graphical user interface of the first user the profile of at least one of the other users sharing said set of selected shared interests and for displaying at the graphical user interface further a list of the shared interests from the selected set.

Thus the invention promotes new connection of users in online communities through their shared interests. The first user will be provided with profiles of potential new contacts who share the same interest, e.g. in sports, music or the like.

In another aspect of the invention the method comprises displaying at the graphical user interface of the first user a list of suggested activities to be chosen by the first user for contacting a user of the other at least one displayed user profiles. Thus the first user can easily choose how to communicate with the new contact(s), e.g. by e-mail, chat or the like.

In a further aspect of the invention the method comprises selecting advertisement relating to said selected interests; and displaying said advertisement at the graphical user interface of the first user. Thus advertisements are not only displayed based on the profile of a single user, but also employed to connect any number of given users by highlighting the interests that they have in common. The first user will also receive ads which directly correspond to the field of shared interest, e.g. an ad banner of a product which both users like.

According to another aspect of the invention the data mining comprises at least one of: analyzing of static data stored in the user profiles; analyzing of actual behavior of the first user and/or of the other users; and analyzing of input data entered by the first and/or by the other users.

According to a further aspect of the invention the selecting the set of shared data comprises selecting from the found shared interests only those interests which each are shared by a minimum number of users.

In another aspect of the invention the displaying the profile of at least one of the other users comprises displaying at first the profiles of those other users who share the most interests with the first user.

The disclosed invention gives the user a reason to actually take notice of advertisements. The sheer amount of data inside a big community can be overwhelming for any user to sort through in order to find the right information and, more importantly, the right people to communicate with. The system connects users that have the same interests, by highlighting the common interests they share.

### Brief Description of Drawings

Further features and advantages of the present invention, as well as the structure and operation of various illustrative embodiments of the present invention, are described in more detail below with reference to the accompanying schematic drawings, wherein:
- Fig. 1: shows the graphical user interface of the first user displaying profiles of other users sharing the same interests and displaying a set or list of these shared interest.

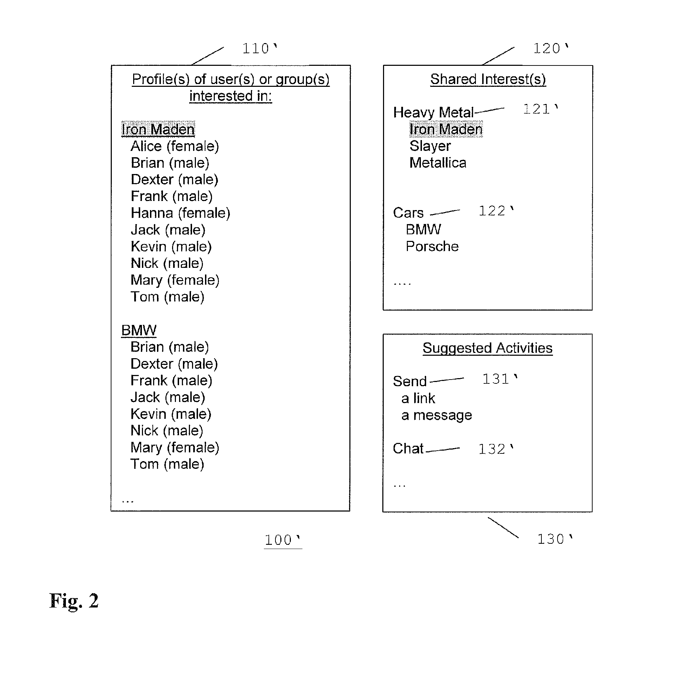

- Fig. 2: shows the graphical user interface of Fig. 1 wherein the first user has selected one item from the list of shared interests and the system has updated and ranked the profiles of the other users according to the selected item.
- Fig. 3 a: shows a page in the profile settings of the logged in user.
- Fig. 3b: shows a list of users that share interests with the logged in user.
- Fig. 4a: shows a different page of the user's view.
- Fig. 4b: shows a list of the user's interests to be used for searching other users that share the same interests.
- Fig. 5a: shows a list of the user's interests to be used for comparing these interests with those of one other user.
- Fig. 5b: shows a result list of the comparison.
- Fig. 6: illustrates the function of the system for comparing other users as a group, collecting their interests as one set of interest and comparing this set to a single user.
- Figs. 7a/b: illustrate the function of the system for comparing compare a group of users with their collected interest to another group of users.
- Fig. 8: shows a resulting ranked list illustrating the match up of how much the users of the selected group share interest in certain content.

### Detailed Description of Preferred Embodiments

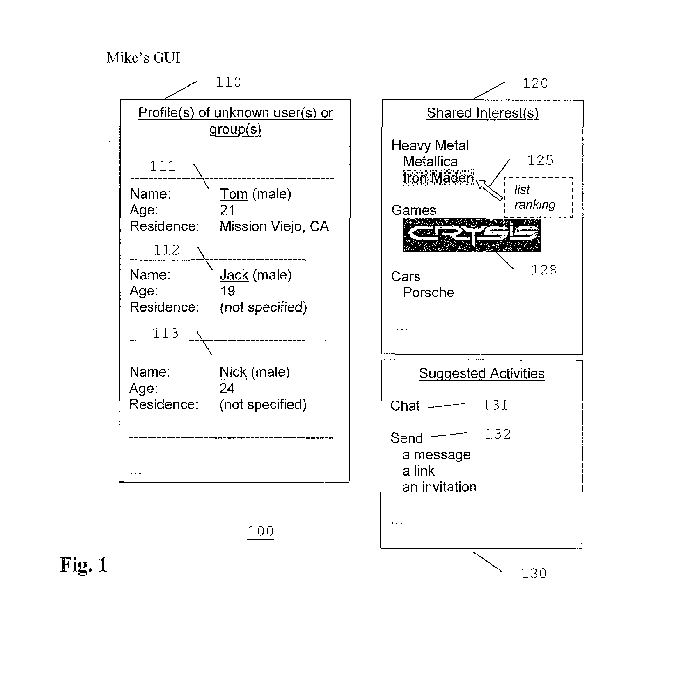

In Fig. 1 there is shown the graphical user interface (GUI) of a first user named "Mike" who is member of an online social network. The system for managing the network may also perform the method of the present invention.

The system has a database containing all user profile data which have been provided by the users via keyboard input or the like. Thus the system can analyse the profile data not only to manage log-ins etc., but also for data mining in order to get information about shared interests among the users. The present invention propose to create such data and to use them for pushing the user's activities get into contact with other users which are unknown to him/her. Further to this the invention gives the user (in this example "Mike") a reason to actually take notice of advertisements.

As shown in Fig. 1 the system displays on Mike's GUI 100 one or more profiles of users or groups who are not yet known by Mike. In a conventional system Mike would have to search for a profile of someone he is not yet connected, finding the profile either by conducting a search for a term he is interested in (such as the PC game "Crysis", the city of "Frankfurt" or the car brand "Porsche") or by browsing the lists of friends of his friends.

The present invention makes Mike's life easier by automatically displaying at least one profile of an unknown user (e.g. "Tom") who the system found to share some interests with Mike. Once the first user "Mike" has clicked on the profile of another user (e.g. "Tom"), the system shows him the shared interests that connect both users and offers options that let the first user contact that shown person. The system can display more than one profile as this is shown in Fig. 1. Thus the user Mike may see in a first window 110 a list of user profiles relating to users Tom, Jack and Nick who are yet unknown by Mike. In a second window 120 the system can show a list or set of shared interest, such as heavy metal music, PC games and cars.

The advertisements "Crysis" 128 shown in this window 120 will reflect the shared interests of all parties, forming a visceral connection between them. Thus the system is featured to create friendship between two or more users via interests, brands and products.

In conventional systems advertisements are seen mostly as annoying necessities, because their purpose and use is controlled by others, not the user. But according to the present invention advertisements are repurposed to demonstrate shared interests. Thus the user is in control of everything that is presented to him. Used in this way, advertisements are less intrusive to the user and may even be welcome.

The term "shared interest" describes any interest in specific contents or activity that more than one user may have in common. These specific contents or activities relating to content can be (but are not limited to): ads, videos, music, news, blogs or events. Based on the available data of the user's interest, the shared data can range from the specific, such as a particular game (e.g. chess) to broad categories (e.g. automobiles).

The system uses different techniques of data mining to create the link between users.
Source of the data:
● The static data stored in the profile of the user serves as a demographic base.
● The actual behavior of the user, e.g. where and when he accesses data.
● Additional data about interests the user may have entered into his profile or that the system may have added based on his behavior.
Thus both user-entered and system-collected data is used to filter the interests of two or more users that are shared with each other.

The invention can provide the display of the shared interest in various ways:

The functionality of the shared interest can be used and integrated in an online community webpage, as well as other similar applications. It can be displayed when the user is logged in and the system server knows who is actually using the device (PC, smartphone or similar).

The shared interest is displayed as a box next to the profile of the person the logged-in user has selected, showing his or her data (likely a short version of his or her profile) plus banner advertisements that both users share.

Lists of friends of another user that the logged-in user is browsing can also be sorted in this way, using the shared interest function to highlight the ones with which he has most in common.

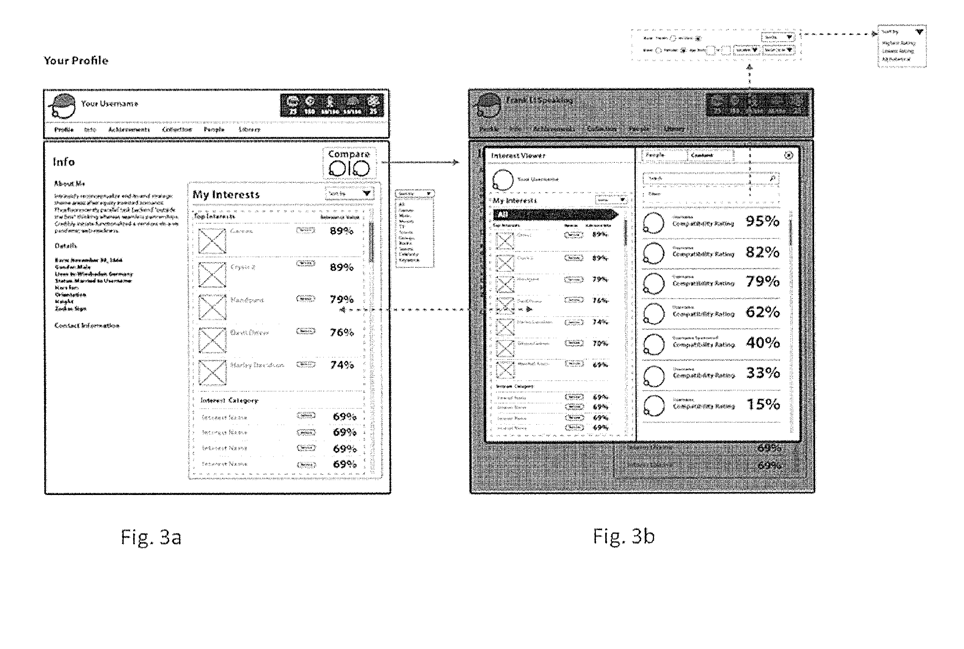

The Figure 3a shows a page in the profile settings of the logged in user, in detail the interests list and their relevance of the logged in user. With the "compare" button the user can start a comparison of his interests with other users.

By searching the interest cloud of the social network the system provides a list of users that share interests with the logged in user (see Fig. 3b). On the right column is a list of other users and their rating of compatibility of the logged in user's interest with the other users' interest. The list ranks the other users from highest rating to lowest rating. The ranking is based on the frequency and relevance of the interests for logged in user and the compared users.

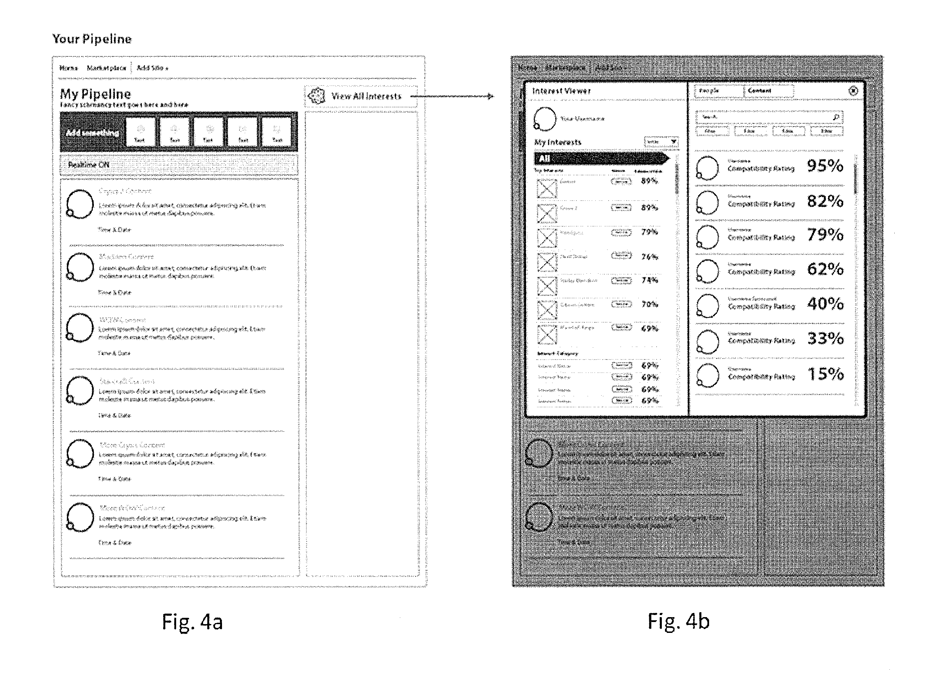

Figure 4a shows a different page of the user's view of the social network, e.g. the pipeline of the user which shows various contents.

Clicking a button "view all interests" (see Fig. 4b) the user can activate a function that lists his interests and searches for other users that share the same interests.

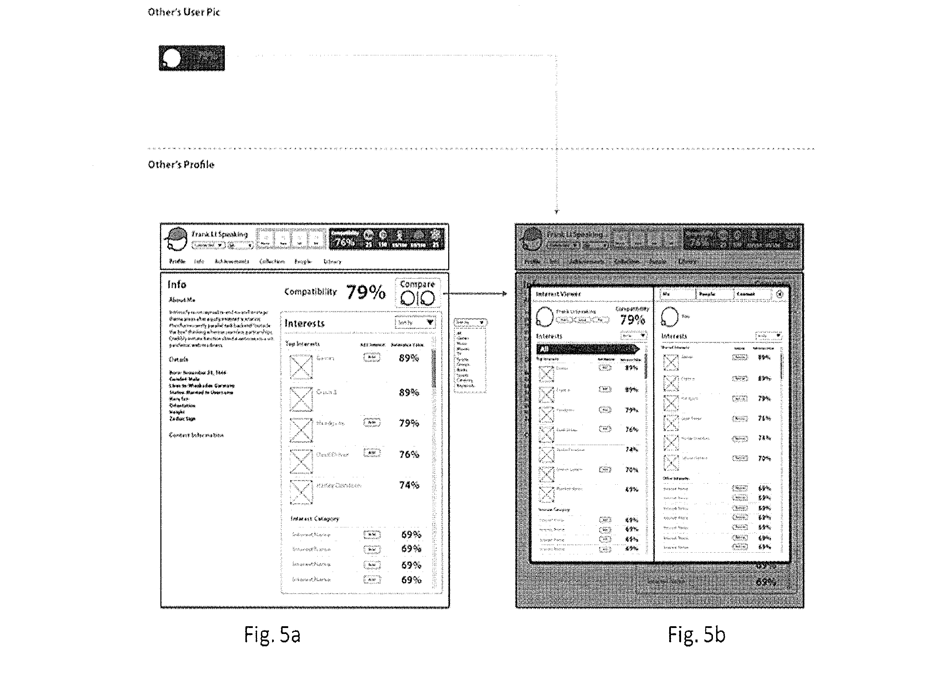

As shown in Figs. 5a/b, the user can also compare his interests (Figure 5a) directly with one other user, listing a detailed comparison ranked by the quality of the match up (Figure 5b).

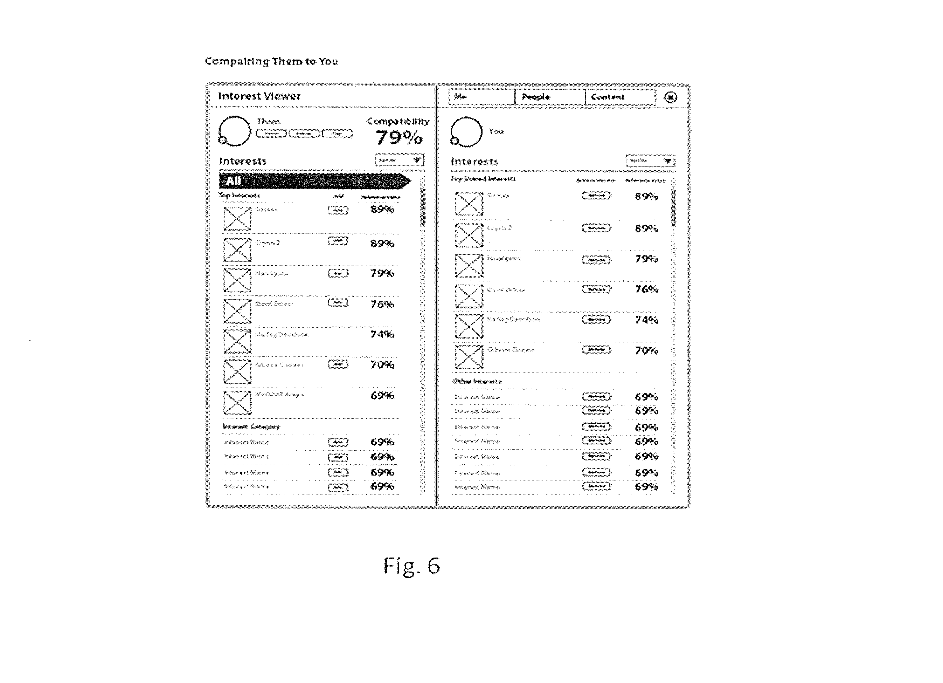

Figure 6 illustrates that the system can compare other users as a group, collecting their interests as one set of interest and compare this set to a single user.

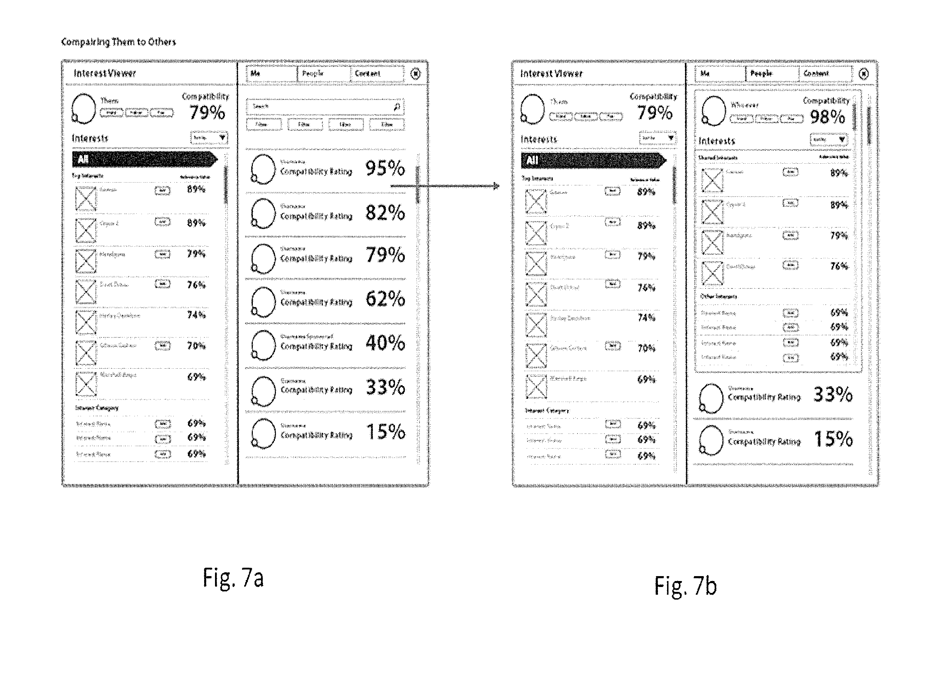

Figure 7 illustrates that the system can compare a group of users with their collected interest to another group of users with their collected interests, independent of the interests of the logged in user.

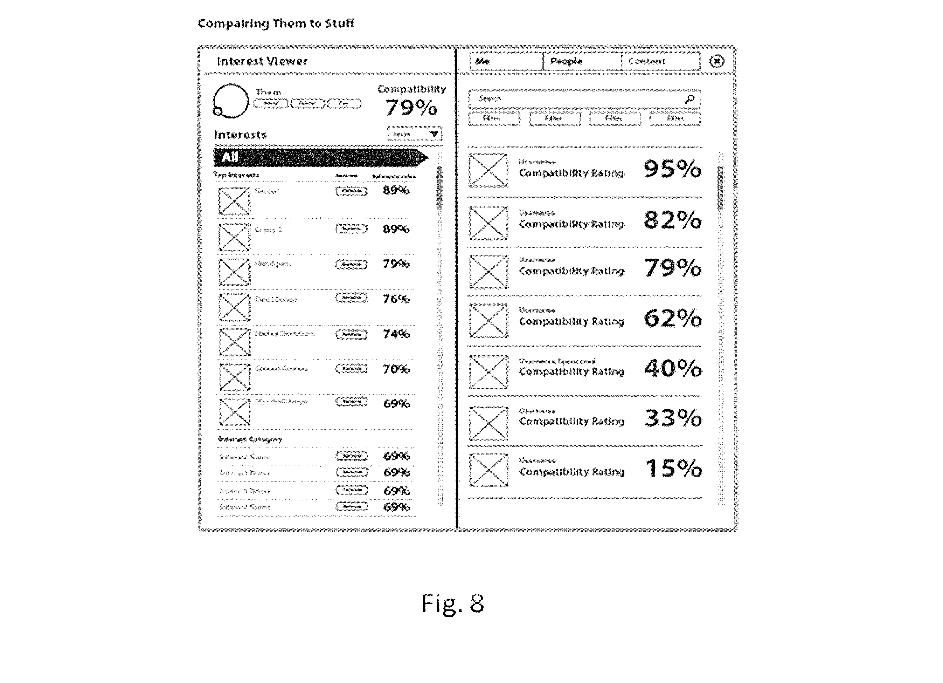

It is illustrated by Figure 8 that the system stores users as much as content as items that are connected to other items. Therefore a user is able to compare the interests of another user or a group of users to one or more items of content. The resulting ranked list shows the match up of how much the users of the selected group share interest in certain content.

There are many use cases for the shared interest, such as follows:

### i) Watching profiles of other users

A major use of the shared interest is to learn more about other users quickly and easily, before contacting them. This is especially true when accessing a profile of an unknown user for the first time, either by being presented with the profile or accessing it directly. The shared interest is also a higher incentive to actually start a relationship with the unknown user as it is already based on positive expectations.

Example: the logged-in user is surfing through other users' profiles, see table 1. In order to pull his attention to interests he really cares about, the advertisement next to the profiles of the different users is based upon the shared interests of both users.

### ii) Multiple users and interests

If more than one user matching the search criteria shares more than one interest with the logged-in user, the whole group is shown as such. With sufficient data, the aim is to connect users and to create groups that share the same interest(s). The system can suggest an action to get everyone in the group together.

Example: a user is surfing through user profiles of users unknown to him. Two users are displayed that both match his search terms and share his interests. As shown in table 2, two users share interest in the same online game as the logged-in user. To actually connect the users an activity is suggested, in this case playing the favorite game together.

### iii) Sort friends lists by shared interest ranking

Another way that the logged-in user can make connections is by browsing the lists of friends of any other user, whether an existing friend of his or someone that he has discovered by browsing (as above). The shared interest function can sort these users by the interests that they share with the logged-in user, placing those with the most in common at the top of the list and, again, highlighting these profiles with advertisements that reflect the interests that they share with the logged-in user. By using the ads as icons next to the user the logged-in user has a fast overview of the displayed ranking of users.

### iv) Enhancing interest by presenting other users with it

A logged-in user is looking at content that's unknown to him (in other words content that is not yet connected with his profile). Next to the content the system displays unkown users that share the interest in this specific content and optionally other interests with the logged-in user. This can convince the user positively to strengthen his interest in the new content and through his interest in the new content connect him to new users via the shared interest.

### v) Strengthening the relationship with known users

A logged-in user sees, upon visiting the profile of a friend (aka a known user), the updated list of shared interests, with the latest additions to the list on top. Thus the logged-in user learns more about his friend. If the logged-in user selects now one of the interests of his friend, the system displays other users sharing the interest, and also suggests an activity with the other users based upon the latest shared interests.

### vi) Advertiser's analysis

An advertiser being logged-in as a normal user wants to compare the interests of several users or groups of users. The advertiser selects these said users or groups, creating a temporary selection of users. The advertiser can now view the interests of this selection, sort them by various means, e.g. highest ranked most frequent interest among this selection. The advertiser can compare the similarities of shared interests among the users by selecting one of more interests and how these overlap among the selected users. Thus the system enables this user (advertiser) to compare the interests of the other user or group without the connection to his own interests.

| **User** | **User 1** | | **User 2** | | **User 3** | | **User 4** | |
|---|---|---|---|---|---|---|---|---|
| Shared Interests | Game 1 | 95% | Game 1 | 15% | Game 1 | 87% | Game 1 | 24% |
| | News | 34% | News | 86% | News | 78% | News | 11% |
| | Racing Cars | 17% | Racing Cars | 67% | Racing Cars | 54% | Racing Cars | 7% |
| | Asian Food | 56% | Asian Food | 10% | Asian Food | 91% | Asian Food | 78% |

### Explanation of the table above:

Four users are combined to a selection. Their individual shared interests are compared and can give different results, depending on the query. As an example four different interests are chosen that are shared in varying relevance by all four users. The comparison can show what interests are most important for that group.

Ranking the most important interests in a group:
**Group Ranking**
   1) Asian Food 40
   2) Game 1 29
   3) News 25
   4) Racing Cars 11

The invention also provides a method to target advertisements toward a group of two or more users that
(a) are yet unconnected (e.g. don't know each other yet) and to increase the chance to connect these users (stimulate a connection) by bringing the interest of the other users to the attention of the single user, and thus increase the value of the possible new connection to the other user.
(b) are connected already, but didn't realize yet the deeper link to the other users by offering the knowledge about the shared interests between the users.

## Claims

1. A method of sharing information in an online social network, comprising:
data mining by analyzing a first user profile and a plurality of other user profiles for finding shared interests among the users of said profiles;
selecting from the found shared interests a set of shared interests;
displaying at the graphical user interface of the first user the profile of at least one of the other users sharing said set of selected shared interests; and
displaying at the graphical user interface further a list of the shared interests from the selected set.

2. The method of claim 1, further comprising
displaying at the graphical user interface of a user, in particular of a user who wants to advertise via the social network, a list of interests of at least one other user or a group of other users, the list enabling the user to compare these interests of the other user or group without the connection to his own interests.

3. The method of claims 1 or 2, further comprising
displaying at the graphical user interface of the first user a list of suggested activities to be chosen by the first user for contacting a user of the other at least one displayed user profiles.

4. The method of any preceding claim, further comprising
selecting advertisement relating to said selected interests; and
displaying said advertisement at the graphical user interface of the first user.

5. The method of any preceding claim, wherein data mining comprises at least one of:
analyzing of static data stored in the user profiles;
analyzing of actual behavior of the first user and/or of the other users;
analyzing of input data entered by the first and/or by the other users.

6. The method of any preceding claim, wherein selecting the set of shared data comprises selecting from the found shared data only those interests which each are shared by a minimum number of users.

7. The method of any preceding claim, wherein displaying the profile of at least one of the other users comprises displaying at first the profiles of those other users who share the most interests with the first user.

8. A computer-readable medium having instructions stored thereon, wherein said instructions, in response to executed by a computing device, cause said computing device to perform a method according to one of the preceding claims.

9. A system for sharing information in an online social network, comprising:
processing means for data mining by analyzing a first user profile and a plurality of other user profiles for finding shared interests among the users of said profiles;
selecting means for selecting from the found shared interests a set of shared interests;
displaying means for displaying at the graphical user interface of the first user the profile of at least one of the other users sharing said set of selected shared interests; and for
displaying at the graphical user interface further a list of the shared interests from the selected set.

10. A method to target advertisements toward a group of two or more users that are yet unconnected and to increase the chance to connect these users, in particular to stimulate a connection, by bringing the interest of the other users to the attention of the single user, and thus increase the value of the possible new connection to the other user.

11. A method to target advertisements toward a group of two or more users that are connected already, but didn't realize yet the deeper link to the other users by offering the knowledge about the shared interests between the users.
